# EUROPEAN PATENT APPLICATION

(11) **EP 4 503 306 A1**
(43) Date of publication of application: **05.02.2025**
(21) Application number: 23780529.6
(22) Date of filing: 28.03.2023
(51) Int. Cl.: H01M 50/449, H01M 50/417, H01M 50/426, H01M 50/434, H01M 50/443, H01M 50/451, H01M 50/457

(54) **SEPARATOR FOR NONAQUEOUS SECONDARY BATTERY, AND NONAQUEOUS SECONDARY BATTERY**

(30) Priority: 31.03.2022 JP 2022060397
(71) Applicant: Teijin Limited, Osaka 530-0005 (JP); Shanghai Energy New Materials Technology Co., Ltd., Shanghai 201399 (CN)
(72) Inventor: NISHIKAWA, Satoshi, Osaka-shi, Osaka 530-0005 (JP)
(74) Representative: Carpmaels & Ransford LLP
(86) International application number: PCT/JP2023/012533
(87) International publication number: WO 2023/190520

(57) **Abstract**

An embodiment of the present invention provides a separator for a non-aqueous secondary battery, including a porous substrate, and an adhesive layer that is provided on at least one side of the porous substrate and that contains a polyvinylidene fluoride type resin, in which the separator contains a nonionic surfactant having a cloud point of from 30°C to 85°C and a molecular weight of from 200 to 1,500.

## Description

### Technical Field

The present disclosure relates to a separator for a non-aqueous secondary battery and a non-aqueous secondary battery.

### Background Art

Conventionally, it has been proposed to provide a porous layer containing a resin and a filler on one side or both sides of a porous substrate for the purpose of improving heat resistance of a separator and improving adhesiveness between an electrode and a separator.

For example, a separator in which a heat-resistant layer containing a polyvinylidene fluoride (PVDF) type resin and an inorganic filler is formed on one side of a polyethylene microporous film as a porous substrate is disclosed (see Japanese Patent No. 5657177). The separator in which an adhesive layer containing polyvinylidene fluoride is formed on a porous substrate has an effect of preventing deformation of a cell due to expansion and contraction of an electrode associated with charge and discharge and enhancing the reliability of a battery. Since the separator adheres to an electrode, contraction during heating is prevented. This contributes to improvement of safety of the battery.

### SUMMARY OF INVENTION

### Technical Problem

However, PVDF has a property of being susceptible to static electricity, and in a case in which an adhesive layer containing PVDF is provided on the outermost surface of a separator, the separator has a property of easily causing a decrease in conveyance performance and a decrease in yield due to easy adsorption of foreign substances. Therefore, it is necessary to perform an appropriate static elimination treatment during handling. In view of such a situation, in a separator provided with an adhesive layer containing PVDF, a treatment for preventing static electricity is considered as one of technical challenges.

For the technical challenge, a technique in which a surfactant is used has been conventionally proposed. However, at present, the technique disclosed so far has an adverse effect of causing an increase in moisture content in a separator or a decrease in cell performance.

A problem to be solved by an embodiment of the present disclosure is to provide a separator for a non-aqueous secondary battery in which an adhesive layer containing a polyvinylidene fluoride type resin is provided on at least one side of a porous substrate so that static electricity is prevented, and handleability is enhanced while adhesiveness to an electrode is maintained.

A problem to be solved by another embodiment of the present disclosure is to provide a non-aqueous secondary battery having excellent battery characteristics while having adhesiveness between a separator and an electrode.

### Solution to Problem

The specific solutions to the problem include the following embodiments:
[1] A separator for a non-aqueous secondary battery, containing:
   a porous substrate; and
   an adhesive layer that is provided on at least one side of the porous substrate and that contains a polyvinylidene fluoride type resin,
   in which the separator contains a nonionic surfactant having a cloud point of from 30°C to 85°C and a molecular weight of from 200 to 1,500.
[2] The separator for a non-aqueous secondary battery according to [1], in which the porous substrate contains a polyolefin microporous film.
[3] The separator for a non-aqueous secondary battery according to [2], in which the porous substrate contains a heat-resistant layer that is provided on at least one side of the polyolefin microporous film and that contains an inorganic filler,
   in which a content of the inorganic filler with respect to the entire heat-resistant layer is 90% by mass or more.
[4] The separator for a non-aqueous secondary battery according to any one of [1] to [3], in which the adhesive layer is provided on both sides of the porous substrate.
[5] The separator for a non-aqueous secondary battery according to any one of [1] to [4], in which the adhesive layer contains a three-dimensional network structure of the polyvinylidene fluoride type resin.
[6] The separator for a non-aqueous secondary battery according to any one of [1] to [5], in which a content of the nonionic surfactant is from 0.05 g/m² to 1.0 g/m².
[7] A non-aqueous secondary battery, containing:
   a positive electrode;
   a negative electrode; and
   the separator for a non-aqueous secondary battery according to any one of [1] to [6], the separator being disposed between the positive electrode and the negative electrode.

### Advantageous Effects of Invention

According to an embodiment of the present disclosure, a separator for a non-aqueous secondary battery, in which an adhesive layer containing a polyvinylidene fluoride type resin is provided on at least one side of a porous substrate so that static electricity is prevented, and handleability is enhanced while adhesiveness to an electrode is maintained, is provided.

According to another embodiment of the present disclosure, a non-aqueous secondary battery having excellent battery characteristics while having adhesiveness between a separator and an electrode is provided.

### DESCRIPTION OF EMBODIMENTS

Hereinafter, the embodiments will be described. Further, the description and the Examples thereof illustrate the present invention, but do not limit the scope of the present invention.

In this specification, the term "process" includes not only an independent process, but also the process which is not clearly distinguished from other processes but achieves the desired purpose thereof.

In this specification, the notation of "(meth)acrylic" means "acrylic" or "methacrylic".

For the separator of this specification, "longitudinal direction" refers to the long shape direction of a separator manufactured in a long shape, and "width direction" refers to a direction orthogonal to the longitudinal direction of the separator. "Longitudinal direction" also refers to "MD direction", and "width direction" also refers to "TD direction".

In this specification, the numerical range denoted by using "to" represents the range inclusive of the number written before and after "to" as the minimum and maximum values. Regarding stepwise numerical ranges designated in the present application, an upper or lower limit set forth in a certain numerical range may be replaced by an upper or lower limit of another stepwise numerical range described. Besides, an upper or lower limit set forth in a certain numerical range of the numerical ranges designated in the application may be replaced by a value indicated in Examples.

Further, in the present application, in a case where plural kinds of substances that correspond to the same component exist in a composition, the amount of the component in the composition refers to the total amount of the plural kinds of substances existing in the composition unless otherwise specified.

In this specification, the "total solid content" refers to the total mass of components excluding a solvent from the total formulation of the composition. As described above, the "solid content" is a component excluding the solvent, and may be, for example, a solid or a liquid at 25°C.

In the present disclosure, a combination of two or more preferred aspects is a more preferred aspect.

The "heat-resistant" in the present disclosure refers to a property where it does not cause melt or decompose in a temperature range of lower than 200°C.

### <Separator for Non-aqueous Secondary Battery>

The separator for a non-aqueous secondary battery of the present disclosure includes a porous substrate, and an adhesive layer that is provided on at least one side of the porous substrate, and that contains a polyvinylidene fluoride type resin. The adhesive layer may be disposed on both sides of the porous substrate. Further, the separator for a non-aqueous secondary battery of the present disclosure contains a nonionic surfactant having a cloud point of from 30°C to 85°C, and that has a molecular weight of from 200 to 1,500.

The separator for a non-aqueous secondary battery of the present disclosure has an adhesive layer containing a polyvinylidene fluoride type resin, and contains a nonionic surfactant having a cloud point and a molecular weight in a specific range, thereby preventing static electricity, improving handleability, and further improving battery characteristics when a battery is formed therewith. The mechanism of action by which such an effect is exhibited is not necessarily clear, but is presumed as follows.

Conventionally, a technique in which a surfactant or an aqueous binder is used for the purpose of preventing static electricity has been known, but the amount of moisture retained therein tends to increase, and the battery performance may be affected. Therefore, it has been found that desired characteristics cannot be obtained simply by using a surfactant or the like, and a technique for appropriately controlling the moisture amount is required. In view of such circumstances, it was found that a specific nonionic surfactant can exhibit desired static electricity prevention while appropriately reducing affinity to moisture, that is, a property of entrapping moisture among a number of surfactants.

The separator for a non-aqueous secondary battery of the present disclosure has been achieved based on the above finding, and in a case where the separator includes an adhesive layer containing a polyvinylidene fluoride type resin, both adhesiveness to an electrode and antistatic performance are achieved by incorporation of a surfactant which is nonionic and has a cloud point and a molecular weight satisfying a specific range. As a result, the separator has an advantage of having excellent handleability and also providing excellent battery characteristics when a battery is formed therewith.

Hereinafter, the separator for a non-aqueous secondary battery (hereinafter, also simply referred to as "separator") of the present disclosure will be described in detail.

### (Nonionic Surfactant)

The separator for a non-aqueous secondary battery of the present disclosure contains a nonionic surfactant having a cloud point of from 30°C to 85°C and a molecular weight of from 200 to 1,500. By selecting a nonionic surfactant having a specific cloud point and a specific molecular weight, the hydrophilicity of the separator does not become too high, and an increase in moisture content of the separator is prevented, and static electricity can be prevented.

In the separator for a non-aqueous secondary battery of the present disclosure, the nonionic surfactant may be contained in any layer, and may be contained in any of the porous substrate, the adhesive layer, and the below-described heat-resistant layer. The nonionic surfactant may be contained in at least one of the porous substrate, the adhesive layer, and the below-described heat-resistant layer, and is preferably contained in at least the adhesive layer, and is preferably contained in the largest amount in the adhesive layer.

The cloud point of the nonionic surfactant is from 30°C to 85°C. When the cloud point is lower than 30°C, the surfactant is difficult to dissolve, and therefore it is difficult to provide the surfactant by preparing an aqueous solution and applying the aqueous solution, and the manufacturing suitability is poor. As a result, it is also difficult to obtain a sufficient antistatic effect. When the cloud point is higher than 85°C, the hydrophilicity becomes too high, and the moisture content of the separator is likely to increase, and the battery performance when a battery is formed therewith is likely to be impaired.

The lower limit of the cloud point of the nonionic surfactant is preferably 33°C or higher, more preferably 35°C or higher, and still more preferably 38°C or higher for a reason similar to that described above. The upper limit of the cloud point of the nonionic surfactant is preferably 60°C or lower, more preferably 50°C or lower, and still more preferably 45°C or lower for a reason similar to that described above.

The cloud point is a value measured in accordance with JIS K 2269.

The molecular weight of the nonionic surfactant is from 200 to 1,500. When the molecular weight is less than 200, the cloud point is lowered, and the lipophilicity is generally too high, and therefore it is difficult to prepare an aqueous solution, and the manufacturing suitability is poor as described above. As a result, it is also difficult to obtain an antistatic effect. When the molecular weight is more than 1,500, from the viewpoint of steric hindrance, surfactant molecules are less likely to be oriented on the surface of the adhesive layer, and it is difficult to obtain a sufficient antistatic effect.

The lower limit of the molecular weight of the nonionic surfactant is preferably 250 or more, more preferably 300 or more, and still more preferably 400 or more for a reason similar to that described above. The upper limit of the molecular weight of the nonionic surfactant is preferably 1,000 or less, more preferably 750 or less, and still more preferably 700 or less for a reason similar to that described above.

The molecular weight is determined by arithmetic calculation from a chemical formula based on the types and number of atoms included in the nonionic surfactant.

The nonionic surfactant refers to a surfactant that is nonionic and exhibits no ionicity even when dissolved in water but exhibits surface activity. The nonionic surfactant of the present disclosure is not particularly limited as long as the surfactant has the cloud point and the molecular weight described above, and can be appropriately selected and used.

Specific examples of the nonionic surfactant include an alkylene oxide surfactant having an alkylene oxide (CₙH₂ₙ-O-, n = 2 or 3) chain.

Examples of the alkylene oxide surfactant include an alkylene oxide alkyl ether. Examples of the alkylene oxide alkyl ether include an ethylene oxide alkyl ether and a propylene oxide alkyl ether, and an ethylene oxide alkyl ether containing an alkyl moiety having from 8 to 18 (preferably from 10 to 16) carbon atoms are more preferable.

Specific examples of the ethylene oxide alkyl ether include polyoxyethylene (9) lauryl ether (cloud point: 83°C, molecular weight: 582, ethylene oxide unit: 9), polyoxyethylene (6) lauryl ether (cloud point: 40°C, molecular weight: 450, ethylene oxide unit: 6), and polyoxyethylene (9) oleyl ether (cloud point: 55°C, molecular weight: 664, ethylene oxide unit: 9).

As the nonionic surfactant of the present disclosure, a commercially available product on the market may be used, and examples thereof include EMULGEN series (examples: EMULGEN 108, EMULGEN 409PV, EMULGEN 707, and EMULGEN 109P) manufactured by Kao Corporation and PLURONIC series (examples: PLURONIC P-84 and PLURONIC L-64) manufactured by ADEKA CORPORATION.

The nonionic surfactant may be contained singly or in combination of two or more kinds thereof.

The content of the nonionic surfactant in the separator for a non-aqueous secondary battery of the present disclosure is preferably 0.05 g/m² or more, more preferably 0.08 g/m² or more, and still more preferably 0.1 g/m² or more. The content of the nonionic surfactant is preferably 1.0 g/m² or less, more preferably 0.7 g/m² or less, and still more preferably 0.6 g/m² or less.

When the content of the nonionic surfactant is 0.05 g/m² or more, a favorable antistatic effect is easily obtained. When the content of the nonionic surfactant is 1.0 g/m² or less, the moisture content of the separator does not become too high.

The content of the nonionic surfactant in the separator for a non-aqueous secondary battery is determined by dissolving the separator in dimethyl sulfoxide and analyzing a soluble component by a nuclear magnetic resonance (NMR) method. Specifically, the content can be calculated by determining the weight of a soluble component by the weight difference before and after dissolution of the separator in dimethyl sulfoxide, and determining the weight ratio of the polyvinylidene fluoride type resin and the nonionic surfactant by ¹H-NMR and ¹⁹F-NMR.

### (Porous Substrate)

The separator for a non-aqueous secondary battery of the present disclosure contains a porous substrate.

The porous substrate refers to a substrate having pores or voids therein. As the substrate, a microporous film; a porous sheet such as non-woven fabric and paper, composed of a fibrous material; and the like may be listed. In particular, a microporous film is preferable from the viewpoint of thinning and increasing the strength of separator. The microporous film refers to a film having plural micropores therein, having a structure in which these micropores are connected to each other, and allowing gas or liquid to pass from one surface to the other surface.

The material constituting the porous substrate may be either an organic material or an inorganic material, as long as having electrical insulation.

The porous substrate may be either a single layer or a multilayer. The porous substrate preferably has a microporous film containing a polyolefin (referred to as "polyolefin microporous film"). In a case where the porous substrate is a single layer, the porous substrate is preferably a polyolefin microporous film. In a case where the porous substrate is a multilayer, a substrate having a polyolefin microporous film and a heat-resistant layer is preferable, and a substrate including a polyolefin microporous film and a heat-resistant layer coated on the polyolefin microporous film is more preferable.

It is preferred that the material constituting the porous substrate contains a thermoplastic resin, from a viewpoint of imparting a shutdown function to the porous substrate. The shutdown function refers to a function of dissolving the constituent material to clog the pores of the porous substrate, thereby blocking ionic migration, and preventing thermal runaway of a battery, when the battery temperature is raised. As the thermoplastic resin, for example, polyesters such as polyethylene terephthalate; polyolefins such as polyethylene and polypropylene; and the like may be mentioned. As the thermoplastic resin, a resin having a flow-elongation deformation temperature less than 200 °C is preferred from the viewpoint of imparting the shutdown function.

As the polyolefin microporous film, one having sufficient mechanical properties and ion permeability may be selected from the polyolefin microporous film which is applied to the conventional separator for a non-aqueous secondary battery. It is preferred that the polyolefin microporous film contains polyethylene, from the viewpoint of exhibiting the shutdown function. The content of the polyethylene is preferably 95% by mass or more.

It is preferred that the polyolefin microporous film contains polyethylene and polypropylene, from the viewpoint of imparting heat resistance that the film is not easily broken when exposed to a high temperature. As the polyolefin microporous film, a microporous film in which polyethylene and polypropylene are present in a mixed state in a layer may be mentioned. It is preferred that the microporous film contains 95% by mass or more of polyethylene and 5% by mass or less of polypropylene, from the viewpoint of compatibility of the shutdown function and heat resistance. In addition, from the viewpoint of compatibility of the shutdown function and heat resistance, a polyolefin microporous film having a lamination structure with two or more layers, in which at least one layer contains polyethylene and at least one layer contains polypropylene, is also preferred.

As the polyolefin contained in the polyolefin microporous film, a polyolefin having a weight average molecular weight of from 100,000 to 5,000,000 is preferred. In the case that the polyolefin has a weight average molecular weight of 100,000 or more, sufficient mechanical properties may be secured. Meanwhile, the polyolefin has a weight average molecular weight of 5,000,000 or less, the shutdown characteristic is good, and film molding is easy.

The polyolefin microporous film may be manufactured by, for example, the following methods. That is, the method includes to extrude a molten polyolefin resin from a T-die to form a sheet, crystallize and elongate the sheet, and further subject the sheet to heat treatment, thereby obtaining a microporous film. Otherwise, the method includes to extrude a polyolefin resin melted with a plasticizer such as liquid paraffin from a T-die, cool it to form a sheet, elongate the sheet, extract the plasticizer, and perform heat treatment, thereby obtaining a microporous film.

As the porous sheet composed of a fibrous material, non-woven fabric composed of fibrous materials of thermal resistant resins, or paper may be mentioned.

### (Heat-Resistant Layer)

The heat-resistant layer is a layer disposed on the polyolefin microporous film (preferably the surface of the polyolefin microporous film).

The heat-resistant layer may be present only on one side of the polyolefin microporous film or on both sides of the polyolefin microporous film. When the heat-resistant layer is present on both sides of the polyolefin microporous film, the separator has more excellent heat resistance, and the safety of the battery can be further enhanced. In addition, curling is less likely to occur in the separator, and the separator is excellent in handleability during battery manufacturing. When the heat-resistant layer is present only on one side of the polyolefin microporous film, the separator has more excellent ion permeability. In addition, the thickness of the entire separator can be reduced, and a battery having a higher energy density can be manufactured.

The heat-resistant layer is preferably a layer containing a binder resin and an inorganic filler.

The binder resin of the heat-resistant layer may be either a water-insoluble resin or a water-soluble resin.

Specific examples of the binder resin include a polyvinylidene fluoride type resin, a wholly aromatic polyamide, a polyamideimide, a polyimide, a polyether sulfone, a polysulfone, a polyether ketone, a polyketone, a polyether imide, a poly-N-vinylacetamide, a polyacrylamide, a copolymerized polyether polyamide, a fluorine type rubber, an acrylic type resin, a styrene-butadiene copolymer, a cellulose, and a polyvinyl alcohol.

The binder resin may be a particulate resin, and examples thereof include resin particles of a polyvinylidene fluoride type resin, a fluorine type rubber, and a styrene-butadiene copolymer. The binder resin may be a water-soluble resin such as a cellulose or a polyvinyl alcohol.

When a particulate resin or a water-soluble resin is used as the binder resin, the binder resin is dispersed or dissolved in water to prepare a coating liquid, and the heat-resistant layer can be formed on a porous substrate using the coating liquid by a dry coating method.

As the binder resin, a heat resistant resin that contains at least one selected from the group of a wholly aromatic polyamide, a polyamideimide, and a polyimide, is preferable from the viewpoint of excellent heat resistance. Among the heat resistant resins, a wholly aromatic polyamide is preferable from the viewpoint of durability. A meta type or para type wholly aromatic polyamide may be used. Among wholly aromatic polyamides, a meta type wholly aromatic polyamide is preferable from viewpoints of easy formation of a porous layer and excellent oxidation-reduction resistance in an electrode reaction. A small amount of an aliphatic monomer may be copolymerized in a wholly aromatic polyamide.

As the wholly aromatic polyamide used as the binder resin, specifically, polymetaphenylene isophthalamide or polyparaphenylene terephthalamide is preferable, and polymetaphenylene isophthalamide is more preferable.

As the binder resin, a polyvinylidene fluoride type resin (PVDF type resin) is preferable from the viewpoint of adhesiveness between the heat-resistant layer and the adhesive layer. Examples of the PVDF type resin include a homopolymer of vinylidene fluoride (that is, polyvinylidene fluoride); a copolymer of vinylidene fluoride and another monomer (polyvinylidene fluoride copolymer); and a mixture of polyvinylidene fluoride and a polyvinylidene fluoride copolymer. Examples of the monomer copolymerizable with vinylidene fluoride include tetrafluoroethylene, hexafluoropropylene, trifluoroethylene, chlorotrifluoroethylene, trichloroethylene, vinyl fluoride, trifluoroperfluoropropyl ether, ethylene, (meth)acrylic acid, methyl (meth)acrylate, (meth)acrylate, vinyl acetate, vinyl chloride, and acrylonitrile. These monomers may be used singly or in combination of two or more kinds thereof. The PVDF type resin preferably has a weight average molecular weight (Mw) of from 600,000 to 3,000,000. The PVDF type resin preferably has an acid value of from 3 mgKOH/g to 20 mgKOH/g. The acid value of the PVDF type resin can be controlled, for example, by introducing a carboxy group into the PVDF type resin. The introduction and introduction amount of a carboxy group into the PVDF type resin can be controlled by using a monomer having a carboxy group as a polymerization component of the PVDF type resin (for example, (meth)acrylic acid, (meth)acrylate, maleic acid, maleic anhydride, maleate, and fluorine-substituted products thereof), and controlling a polymerization ratio thereof.

Examples of the inorganic filler may include, but are not particularly limited, particles of metal hydroxides such as aluminum hydroxide, magnesium hydroxide, calcium hydroxide, chromium hydroxide, zirconium hydroxide, cerium hydroxide, nickel hydroxide, and boron hydroxide; particles of metal oxides such as silica, alumina, zirconia, magnesium oxide, and barium titanate; particles of carbonates such as calcium carbonate and magnesium carbonate; particles of sulfates such as barium sulfate and calcium sulfate, and the like. The inorganic filler is preferably particles containing at least one selected from the group consisting of magnesium-based particles and barium-based particles from the viewpoint of stability to an electrolytic solution and electrochemical stability.

Here, the magnesium-based particles mean inorganic filler containing a magnesium compound, and specific examples thereof include magnesium hydroxide and magnesium oxide.

The barium-based particles mean inorganic filler containing a barium compound, and specific examples thereof include barium sulfate and barium titanate.

The inorganic filler may be surface-modified with a silane coupling agent or the like.

The particle shape of the inorganic filler is not limited, and may be a spherical shape, an elliptical shape, a plate shape, a needle shape, or an amorphous shape. The inorganic filler contained in the heat-resistant layer is preferably plate-shaped particles or non-aggregated primary particles from the viewpoint of suppressing short circuit of a battery.

The inorganic filler preferably has an average particle size of from 0.01 µm to 10 µm. A lower limit thereof is more preferably 0.1 µm or more, and an upper limit thereof is more preferably 5 µm or less.

The average particle size is a value measured using a laser diffraction particle size distribution measuring apparatus, and is measured using, for example, MASTERSIZER 2000 manufactured by Sysmex Corporation. Specifically, the central particle size (D50) in the volume particle size distribution of the dispersion liquid obtained by mixing and dispersing an inorganic filler, water (dispersion medium), and a nonionic surfactant (Triton X-100; dispersant) is defined as the average particle size.

As the porous substrate, a substrate having a heat-resistant layer further containing an inorganic filler and having a content of the inorganic filler with respect to the entire heat-resistant layer of 90% by mass or more on at least one side of the polyolefin microporous film is preferable. The content of the inorganic filler with respect to the entire heat-resistant layer is preferably 90% by mass or more and less than 100% by mass, and more preferably 95% by mass or more and less than 100% by mass.

The inorganic filler may be used singly or in combination of two or more kinds thereof.

The content of the inorganic filler in the heat-resistant layer is preferably from 2.0 g/m² to 20.0 g/m². When the content of the inorganic filler is 2.0 g/m² or more, the separator has more excellent heat resistance. When the content of the inorganic filler is 20.0 g/m² or less, the heat-resistant layer is hardly peeled off and falls off.

The heat-resistant layer may contain an additive, for example, a dispersant other than the above described nonionic surfactant, a wetting agent, an antifoaming agent, or a pH adjuster. The dispersant is added to a coating liquid for forming a heat-resistant layer for the purpose of improving dispersibility, coatability, or storage stability. The wetting agent, the antifoaming agent, or the pH adjuster is added to a coating liquid for forming a heat-resistant layer for the purpose of, for example, improving compatibility with the polyolefin microporous film, suppressing mixing of air into the coating liquid, or adjusting the pH.

### -Characteristics of Heat-Resistant Layer-

In the separator of the present disclosure, the thickness of the heat-resistant layer is preferably 0.5 µm or more per side, and more preferably 0.8 µm or more per side from the viewpoint of heat resistance or handleability of the separator, and is preferably 4.0 µm or less per side, and more preferably 3.5 µm or less per side from the viewpoint of handleability of the separator or energy density of the battery. The thickness of the heat-resistant layer is preferably 1.0 µm or more, more preferably 1.6 µm or more, and preferably 8.0 µm or less, more preferably 7.0 µm or less as the total thickness of both sides, regardless of whether the heat-resistant layer is present on only one side or both sides of the porous substrate.

The heat-resistant layer may be a porous layer having a plurality of pores. In a case where the heat-resistant layer is a porous layer, the porosity is preferably from 30% to 70%.

In a case where the porous substrate has a polyolefin microporous film and a heat-resistant layer, the peel strength between the polyolefin microporous film and the heat-resistant layer is preferably 5 N/m or more, more preferably 10 N/m or more, and still more preferably 20 N/m or more from the viewpoint of the adhesive strength of the separator to an electrode. The peel strength is preferably 75 N/m or less, more preferably 60 N/m or less, and still more preferably 50 N/m or less from the viewpoint of ion permeability.

### (Adhesive Layer)

The separator for a non-aqueous secondary battery of the present disclosure has an adhesive layer containing a polyvinylidene fluoride type resin on at least one side of a porous substrate. The adhesive layer is responsible for adhesion between the separator and, for example, an electrode.

The adhesive layer is preferably disposed not only on one side of the porous substrate but also on both sides of the porous substrate from the viewpoint of further exhibiting the effect of the present disclosure.

The adhesive layer contains a polyvinylidene fluoride type resin. Examples of the polyvinylidene fluoride type resin include a homopolymer of vinylidene fluoride (that is, polyvinylidene fluoride); a copolymer of vinylidene fluoride and other monomer (polyvinylidene fluoride copolymer); a mixture of polyvinylidene fluoride and a polyvinylidene fluoride copolymer. Examples of the monomer copolymerizable with vinylidene fluoride include tetrafluoroethylene, hexafluoropropylene, trifluoroethylene, chlorotrifluoroethylene, trichloroethylene, vinyl fluoride, trifluoroperfluoropropyl ether, ethylene, (meth)acrylic acid, methyl (meth)acrylate, (meth)acrylate, vinyl acetate, vinyl chloride, acrylonitrile, and the like. These monomers may be used singly or in combination of two or more kinds thereof.

The polyvinylidene fluoride copolymer is preferably a copolymer having 50% by mole or more of a constituent unit derived from vinylidene fluoride from the viewpoint of obtaining mechanical strength capable of withstanding pressurization and heating during battery manufacturing.

As the polyvinylidene fluoride copolymer, a copolymer of vinylidene fluoride and tetrafluoroethylene, a copolymer of vinylidene fluoride and hexafluoropropylene, or a copolymer of vinylidene fluoride and trifluoroethylene is preferable, and a copolymer of vinylidene fluoride and hexafluoropropylene is more preferable. As the copolymer of vinylidene fluoride and hexafluoropropylene, a copolymer containing a constituent unit derived from hexafluoropropylene in an amount of from 0.1% by mole to 10 %by mole (preferably from 0.5% by mole to 5 %by mole) is preferable.

The weight average molecular weight of the polyvinylidene fluoride type resin is preferably from 1,000 to 5,000,000, more preferably from 10,000 to 3,000,000, and still more preferably from 50,000 to 2,000,000.

The polyvinylidene fluoride type resin may be contained in the form of particles. The adhesive layer may be a layer having a structure in which particles of the polyvinylidene fluoride type resin are attached onto the porous substrate. The adhesive layer containing particles of the polyvinylidene fluoride type resin may allow a gas or a liquid to pass from one side to the other side through a gap present between particles of the polyvinylidene fluoride type resin. The structure in which particles of the polyvinylidene fluoride type resin are attached includes not only an aspect in which the particle shape is retained in the completed separator, but also an aspect in which the particle shape is not retained due to partial melting of the particles by a heat treatment or a drying treatment in the manufacturing process.

The adhesive layer preferably has a three-dimensional network structure of a polyvinylidene fluoride type resin. When the adhesive layer has a three-dimensional network structure, the ion permeability in the adhesive layer is favorable and uniform even after adhesion to an electrode.

The three-dimensional network structure refers to a structure in which pores (spaces) are three-dimensionally spread in different directions (for example, a plurality of particles are connected) in a three-dimensional space including a left-right direction, a vertical direction, a front-back direction, and an intermediate oblique direction thereof.

The three-dimensional network structure can be formed by dissolving a polyvinylidene fluoride type resin in an organic solvent, applying a polyvinylidene fluoride type resin-containing liquid to a porous substrate, then immersing the substrate in a solidification liquid containing a poor solvent for the polyvinylidene fluoride type resin, followed by washing with water and drying.

The adhesive layer having a three-dimensional network structure can also be formed using particles of a polyvinylidene fluoride type resin.

However, the method of forming the three-dimensional network structure is not limited thereto.

Whether the adhesive layer has a three-dimensional network structure can be checked by cutting the completed separator along a plane parallel to the thickness direction and observing the adhesive layer on the cut face with a scanning electron microscope.

When the adhesive layer is configured to be attached to the heat-resistant layer or the porous substrate, interfacial fracture between the heat-resistant layer or the porous substrate and the adhesive layer is less likely to occur. In addition, when the adhesive layer has a structure in which particles of a polyvinylidene fluoride type resin are connected and linked to each other, the adhesive layer has excellent toughness, and cohesive fracture of the adhesive layer is less likely to occur.

The adhesive layer may further contain another resin other than the polyvinylidene fluoride type resin in accordance with the formulation of the positive electrode or the negative electrode as long as the effect of the present disclosure is not significantly impaired. Examples of the another resin include a fluorine type rubber, an acrylic type resin, a styrene-butadiene copolymer, a homopolymer or a copolymer of a vinyl nitrile compound (such as acrylonitrile or methacrylonitrile), carboxymethyl cellulose, hydroxyalkyl cellulose, polyvinyl alcohol, polyvinyl butyral, polyvinylpyrrolidone, and a polyether (such as polyethylene oxide or polypropylene oxide). The adhesive layer preferably contains a polyvinylidene fluoride type resin and an acrylic type resin from the viewpoint of excellent oxidation resistance. In addition, the adhesive layer preferably contains particles of a mixture of a polyvinylidene fluoride type resin and an acrylic type resin or a mixture of first particles containing a polyvinylidene fluoride type resin (preferably more than 50% by mass with respect to the total solid content) and second particles containing an acrylic type resin (preferably more than 50% by mass with respect to the total solid content) from the viewpoint of adjusting the ion permeability of the adhesive layer, the adhesiveness of the adhesive layer to an electrode, the peel strength between the adhesive layer and the heat-resistant layer, and the handleability of the adhesive layer in a well-balanced manner.

Examples of the acrylic type resin include a poly(meth)acrylic acid, a poly(meth)acrylate salt, a poly(meth)acrylate ester, a crosslinked poly(meth)acrylic acid, a crosslinked poly(meth)acrylate salt, and a crosslinked poly(meth)acrylate ester, which may be modified.

In the adhesive layer, the content of the polyvinylidene fluoride type resin with respect to the entire layer is preferably more than 50% by mass, more preferably 70% by mass or more, and still more preferably 90% by mass or more from the viewpoint of adjusting the ion permeability of the adhesive layer, the adhesiveness of the adhesive layer to an electrode, the peel strength between the adhesive layer and the heat-resistant layer, and the handleability of the adhesive layer in a well-balanced manner.

The adhesive layer may contain an additive such as a dispersant such as a surfactant, a wetting agent, an antifoaming agent, or a pH adjusting agent.

The adhesive layer can be formed by preparing a polyvinylidene fluoride type resin-containing liquid for forming the adhesive layer and providing (for example, applying) the polyvinylidene fluoride type resin-containing liquid onto the porous substrate. The adhesive layer may be formed, for example, by preparing a resin particle dispersion liquid containing particles of a polyvinylidene fluoride type resin and applying the resin particle dispersion liquid onto a porous substrate, or the like.

The adhesive layer is preferably 0.2 g/m² or more per side from the viewpoint of adhesiveness to an electrode, and is preferably 2.0 g/m² or less per side from the viewpoint of ion permeability, handleability of a separator, or energy density of a battery.

### -Characteristics of Separator-

The separator of the present disclosure has a thickness of preferably 8.0 µm or more, more preferably 9.0 µm or more, from the viewpoint of the mechanical strength of the separator, and preferably 20.0 µm or less, more preferably 15.0 µm or less, from the viewpoint of energy density of a battery.

The piercing strength of the separator of the present disclosure is preferably from 150 g to 1,000 g, more preferably from 200 g to 600 g, from the viewpoint of the mechanical strength of the separator and short circuit resistance of a battery . The measurement method of the piercing strength of the separator is identical to the measurement method of the piercing strength of the porous substrate.

It is preferred that the porosity of the separator of the present disclosure is from 30% to 60%, from the viewpoint of adhesiveness to an electrode, handleability, ion permeability, or mechanical strength of the separator.

The moisture amount (by mass) contained in the separator of the present disclosure is preferably 1200 ppm or less, and more preferably 1000 ppm or less. As the moisture amount of the separator is smaller, when configuring the battery, the reaction of the electrolyte solution and water may be suppressed, and gas generation in the battery may be suppressed, thereby improving the cycle characteristics of the battery. In this regard, the moisture amount contained in the separator is more preferably 800 ppm or less, still more preferably 600 ppm or less, and particularly still more preferably 500 ppm or less.

The film resistance of the separator of the present disclosure is preferably from 0.5 ohm·cm² to 10 ohm·cm², and more preferably from 1 ohm·cm² to 8 ohm·cm², from the viewpoint of the load characteristics of the battery.

The Gurley value (JIS P8117:2009) of the separator of the present disclosure is preferably from 50 sec/100 ml to 800 sec/100 ml, more preferably from 80 sec/100 ml to 500 sec/100 ml, still more preferably from 100 sec/100 ml to 400 sec/100 ml, from the viewpoint of good balance between mechanical strength and ion permeability.

It is preferred that the separator of the present disclosure has the Gurley value difference between the Gurley value of the separator and the Gurley value of the porous substrate from 20 sec/100 ml to 300 sec/100 ml from the viewpoint of ion permeability. The Gurley value difference between the Gurley value of the separator and the Gurley value of the porous substrate is more preferably 200 sec/100 ml or less, and still more preferably 150 sec/100 ml or less.

The tensile strength of the separator of the present disclosure in the MD direction and TD direction is preferably 500 kgf/cm² or more and more preferably 700 kgf/cm² or more, from the viewpoint of the mechanical strength or the handleability of a separator. The upper limit is usually 3000 kgf/cm² or less.

### -Method of Manufacturing Separator-

The separator of the present disclosure is manufactured by a method including a process of molding an adhesive layer containing a polyvinylidene fluoride type resin on at least one side of a porous substrate, and a process of attaching a nonionic surfactant.

The adhesive layer can be molded through the following processes. That is, in this process, a polyvinylidene fluoride type resin solution is prepared by dissolving a polyvinylidene fluoride type resin in a mixed solvent containing a solvent that dissolves the polyvinylidene fluoride type resin (hereinafter also referred to as "good solvent") and a solvent that does not dissolve the polyvinylidene fluoride type resin (hereinafter also referred to as "poor solvent"). This solution is applied to at least one side of a substrate, and then the substrate is immersed in a solidification liquid containing a mixed solvent and water as an example of a poor solvent. As a result, the polyvinylidene fluoride type resin is solidified into a three-dimensional network structure, the solidification liquid is washed with water, and water is dried.

Here, examples of the good solvent include polar amide solvents such as N-methylpyrrolidone, dimethylacetamide, and dimethylformamide. Examples of the poor solvent include water, methanol, ethanol, propyl alcohol, butyl alcohol, butanediol, ethylene glycol, propylene glycol, and tripropylene glycol. The mixed solvent does not necessarily contain a poor solvent, and may be composed only of a good solvent.

The adhesive layer can also be molded by a method in which a polyvinylidene fluoride type resin solution similar to the above is applied to at least one side of a substrate, and then the good solvent is dried to deposit the polyvinylidene fluoride type resin into a three-dimensional network structure, and then the poor solvent is removed by drying or extraction.

In a case where coating is performed using a dispersion obtained by dispersing an inorganic filler in a polyvinylidene fluoride type resin solution, the adhesive layer having a three-dimensional network structure can be molded by drying and removing the mixed solvent after coating.

The attachment of the nonionic surfactant can be achieved by applying a nonionic surfactant aqueous solution to the porous substrate on which the adhesive layer is molded. The application of the nonionic surfactant aqueous solution is preferably performed after the polyvinylidene fluoride type resin is deposited into a three-dimensional network structure in an adhesive layer molding process, and particularly preferably performed after the adhesive layer after drying is molded on the porous substrate. Here, the application of the nonionic surfactant aqueous solution can be achieved by a known method such as gravure coating or dip coating.

### <Non-Aqueous Secondary Battery>

A non-aqueous secondary battery of the present disclosure includes a positive electrode, a negative electrode, and the separator for a non-aqueous secondary battery of the present disclosure described above disposed between the positive electrode and the negative electrode. The non-aqueous secondary battery of the present disclosure is a non-aqueous secondary battery that provides an electromotive force through doping and dedoping of lithium. The doping means occlusion, support, adsorption, or insertion, and means a phenomenon in which lithium ions enter an active material of an electrode such as a positive electrode.

In the non-aqueous secondary battery of the present disclosure, the separator of the present disclosure is excellent in adhesion to an electrode, prevents static electricity, and has excellent handleability, so that the productivity of the battery and the cycle characteristics (capacity retention rate) of the battery are excellent.

The non-aqueous secondary battery of the present disclosure has a structure in which, for example, a battery element having the positive electrode and the negative electrode facing each other through the separator is enclosed together with the electrolyte solution inside of the exterior material. The non-aqueous secondary battery of the present disclosure is preferred for particularly a lithium ion secondary battery.

Hereinafter, aspect examples of the positive electrode, negative electrode, electrolyte solution, and exterior material included in the non-aqueous secondary battery according to the present disclosure will be described.

Examples of an embodiment of the positive electrode include a structure in which an active material layer containing a positive electrode active material and a binder resin is formed on a current collector. The active material layer may further contain a conductive auxiliary agent. Examples of the positive electrode active material include a lithiumcontaining transition metal oxide, and specific examples thereof include LiCoO₂, LiNiO₂, LiMn_{1/2}Ni_{1/2}O₂, LiCo_{1/3}Mn_{1/3}Ni_{1/3}O₂, LiMn₂O₄, LiFePO₄, LiCo_{1/2}Ni_{1/2}O₂, and LiAl_{1/4}Ni_{3/4}O₂. Examples of the binder resin include a polyvinylidene fluoride type resin, and a styrene-butadiene copolymer. Examples of the conductive auxiliary agent include carbon materials such as acetylene black, Ketjen black, and graphite powder. Examples of the current collector include an aluminum foil, a titanium foil, and a stainless steel foil, each having a thickness of from 5 µm to 20 µm.

In the non-aqueous secondary battery according to the present disclosure, when the adhesive layer of the separator according to the present disclosure includes a polyvinylidene fluoride type resin, since a polyvinylidene fluoride type resin has excellent oxidation resistance, when the adhesive layer is disposed by contacting the positive electrode of the non-aqueous secondary battery, a positive electrode active material that can be operated at a high voltage of 4.2 V or more, such as LiMn_{1/2}Ni_{1/2}O₂ and LiCo_{1/3}Mn_{1/3}Ni_{1/3}O₂, can be easily applicable.

Examples of an embodiment of the negative electrode include a structure in which an active material layer containing a negative electrode active material and a binder resin is formed on a current collector. The active material layer may further contain a conductive auxiliary agent. Examples of the negative electrode active material include materials capable of electrochemically occluding lithium. Specific examples thereof include carbon materials; and alloys of lithium in combination with silicon, tin, aluminum; wood's alloy, or the like. Examples of the binder resin include a polyvinylidene fluoride type resin and a styrene-butadiene copolymer. Examples of the conductive auxiliary agent include carbon materials such as acetylene black, Ketjen black, and graphite powder. Examples of the current collector include a copper foil, a nickel foil, and a stainless steel foil, each having a thickness of from 5 µm to 20 µm. Instead of using the negative electrode described above, a metal lithium foil may be used as the negative electrode.

The electrolyte solution is a solution of a lithium salt dissolved in a non-aqueous solvent. The example of the lithium salt includes LiPF₆, LiBF₄, LiClO₄ and the like. The example of the non-aqueous solvent includes cyclic carbonates such as ethylene carbonate, propylene carbonate, fluoroethylene carbonate, difluoroethylene carbonate and vinylene carbonate; chain carbonates such as dimethyl carbonate, diethyl carbonate, ethylmethyl carbonate and a fluorine substituent thereof; cyclic esters such as γ-butyrolactone and γ-valerolactone; and the like, and these may be used alone, or in combination. As the electrolyte solution, it is preferred to mix the cyclic carbonate and the chain carbonate in a mass ratio (cyclic carbonate : chain carbonate) of from 20:80 to 40:60, and dissolve the lithium salt at from 0.5 mol/L to 1.5 mol/L.

As the exterior materials, a metal can, a pack made of an aluminum laminate film, or the like may be listed. The shape of the battery may be a square, a cylinder, a coin, or the like, but the separator of the present disclosure is preferred for any shape.

Examples of a method of manufacturing the non-aqueous secondary battery of the present disclosure include a manufacturing method including impregnating a separator with an electrolytic solution and subjecting the separator to a heat press treatment (referred to as "wet heat press" in the present disclosure) to bond the separator to an electrode; and a manufacturing method including subjecting a separator to a heat press treatment without causing the separator to be impregnated with an electrolytic solution (referred to as "dry heat press" in the present disclosure) to bond the separator to an electrode.

The non-aqueous secondary battery of the present disclosure can be manufactured by disposing the separator of the present disclosure between a positive electrode and a negative electrode, winding the resulting product in a length direction to manufacture a wound body, and then performing, for example, the following manufacturing methods 1 to 3 using this wound body. In the present disclosure, the effect of the separator for a non-aqueous secondary battery of the present disclosure described above, is more expected in the manufacturing method 1 or 2. However, the manufacturing method 3 is also applicable. The same applies to a case of using an element manufactured by a method of stacking at least one layer of a positive electrode, at least one layer of a separator, and at least one layer of a negative electrode in this order (a so-called stack method) instead of the wound body.

Manufacturing method 1: The wound body is dry-heat-pressed to bond the electrodes to the separator. Thereafter, the resulting product is housed in an exterior material (for example, an aluminum laminated film pack. The same applies hereinafter), and an electrolytic solution is injected therein. The wound body is further wet-heat-pressed from the outside of the exterior material to perform adhesion between the electrodes and the separator and sealing of the exterior material.

Manufacturing method 2: The wound body is dry-heat-pressed to bond the electrodes to the separator. Thereafter, the resulting product is housed in an exterior material, and an electrolytic solution is injected therein to perform sealing of the exterior material.

Manufacturing method 3: The wound body is housed in an exterior material, and an electrolytic solution is injected therein. The wound body is wet-heat-pressed from the outside of the exterior material to perform adhesion between the electrodes and the separator and sealing of the exterior material.

As conditions of the hot pressing in the manufacturing methods 1 to 3, the press temperature is preferably from 60°C to 120°C, and more preferably from 70°C to 100°C, and the press pressure is preferably from 0.5 kg to 90 kg as a load per 1 cm² of the electrode in each of the dry heat press and the wet heat press. The pressing time is preferably adjusted according to the pressing temperature and the pressing pressure, and is adjusted, for example, in the range of from 0.1 minutes to 60 minutes.

In the manufacturing method 1 or 2, room-temperature pressing (pressurization at room temperature) may be performed on a wound body before dry heat pressing to temporarily bond the wound body. In the manufacturing method 2, the wound body may be temporarily bonded by room-temperature pressing before the wound body is housed in the exterior material.

### EXAMPLES

Hereinafter, the present invention will be described in more detail, by the following Examples. However, the present invention is not limited to the following Examples as long as it does not deviate from its purpose.

### [Measurement of Cloud Point]

Measurement was performed in accordance with JIS K 2269.

### [Measurement of Content of Nonionic Surfactant]

The content of the nonionic surfactant in the separator for a non-aqueous secondary battery was determined by dissolving the separator in dimethyl sulfoxide and analyzing a soluble component by a nuclear magnetic resonance (NMR) method. Specifically, the content was calculated by determining the weight of a soluble component by the weight difference before and after dissolution of the separator in dimethyl sulfoxide, and determining the weight ratio of the polyvinylidene fluoride type resin and the nonionic surfactant by ¹H-NMR and ¹⁹F-NMR.

### [Evaluation of Electrostatic Propensity]

Measurement was performed by a half-life method described in JIS L 1094. Specifically, a separator manufactured in each of the following examples and comparative examples was used as a sample, and the saturation voltage and half-life of the sample were measured after corona discharge was applied to the sample at 10 kV for 3 minutes with a distance between the sample and an electrode set to 20 mm using a static honestmeter (manufactured by SHISHIDO ELECTROSTATIC, LTD.).

### [Measurement of Moisture Content]

Measurement was performed using a Karl Fischer moisture content meter. Specifically, a separator manufactured in each of the following examples and comparative examples was used as a sample, and the sample was stored in a dry room at a dew point of - 55°C for 1 hour, and then each sample was heated at 150°C for 15 minutes. The moisture discharged during this time was carried to a Karl Fischer moisture content meter using dry air (dew point: -55°C) as a carrier gas, and the moisture amount was measured by a coulometric method and divided by the sample weight to determine the moisture content.

### [Evaluation of Battery Performance]

A mixture layer of graphite/styrene-butadiene rubber/carboxymethyl cellulose (= 96.2/2.8/1.0 [mass ratio]) was molded on a copper foil to form a negative electrode. A mixture layer of lithium cobaltate/polyvinylidene fluoride/acetylene black (= 94.0/3.0/3.0 [mass ratio]) was molded on an aluminum foil to form a positive electrode. The obtained negative electrode and positive electrode were bonded to each other with a separator interposed therebetween, and placed in a pack made of an aluminum laminate film, and then an electrolytic solution was injected into the pack, and the pack was sealed, thereby obtaining a battery. Here, the electrolytic solution was 1 M (mol/L) LiPF₆-ethylene carbonate/ethyl methyl carbonate (= 3/7 [mass ratio]).

The battery performance was evaluated based on a 10C constant current discharge capacity retention rate with respect to a 0.1C constant current discharge capacity. The discharge cutoff voltage was set to 2.5 V. As the charging, constant-current and constantvoltage charging at 0.1 C and 4.2 V was performed.

### (Example 1)

An aqueous solution of EMULGEN 108 (manufactured by Kao Corporation) which is a nonionic surfactant having a cloud point of 40°C and a molecular weight of 450 was applied to both sides of a separator (product model number: ND7T211O, manufactured by SEMCORP) in which an adhesive layer having a three-dimensional network structure containing a polyvinylidene fluoride-hexafluoropropylene copolymer was further layered on the front and back surfaces (the surface and the other surface of a heat-resistant layer containing alumina particles and an acrylic type resin) of a porous substrate in which the heat-resistant layer is layered on one side of a polyethylene microporous film, followed by drying under drying conditions at 60°C for 10 minutes to manufacture a separator. The attachment amount of EMULGEN 108 in the separator was set to 0.2 g/m². The manufactured separator was cut along a plane parallel to the thickness direction, and the adhesive layer on the cut face was observed with a scanning electron microscope to check that the adhesive layer had a three-dimensional network structure.

The results of measuring and evaluating the electrostatic propensity, moisture content, and battery performance using the manufactured separator as a sample are shown in Table 1.

### (Example 2)

A separator was manufactured in the same manner as in Example 1 except that the attachment amount of EMULGEN 108 in Example 1 was changed to 0.13 g/m². The results of measuring and evaluating the electrostatic propensity, moisture content, and battery performance using the manufactured separator as a sample are shown in Table 1.

The separator was cut along a plane parallel to the thickness direction, and the adhesive layer on the cut face was observed with a scanning electron microscope to check that the adhesive layer had a three-dimensional network structure.

### (Example 3)

A separator was manufactured in the same manner as in Example 1 except that the attachment amount of EMULGEN 108 in Example 1 was changed to 0.4 g/m². The results of measuring and evaluating the electrostatic propensity, moisture content, and battery performance using the manufactured separator as a sample are shown in Table 1.

The separator was cut along a plane parallel to the thickness direction, and the adhesive layer on the cut face was observed with a scanning electron microscope to check that the adhesive layer had a three-dimensional network structure.

### (Example 4)

A separator was manufactured in the same manner as in Example 1 except that the attachment amount of EMULGEN 108 in Example 1 was changed to 0.6 g/m². The results of measuring and evaluating the electrostatic propensity, moisture content, and battery performance using the manufactured separator as a sample are shown in Table 1.

The separator was cut along a plane parallel to the thickness direction, and the adhesive layer on the cut face was observed with a scanning electron microscope to check that the adhesive layer had a three-dimensional network structure.

### (Example 5)

A separator was manufactured in the same manner as in Example 1 except that EMULGEN 108 in Example 1 was replaced with EMULGEN 409PV (manufactured by Kao Corporation) which is a nonionic surfactant having a cloud point of 55°C and a molecular weight of 664. The results of measuring and evaluating the electrostatic propensity, moisture content, and battery performance using the manufactured separator as a sample are shown in Table 1.

The separator was cut along a plane parallel to the thickness direction, and the adhesive layer on the cut face was observed with a scanning electron microscope to check that the adhesive layer had a three-dimensional network structure.

### (Comparative Example 1)

A separator was manufactured in the same manner as in Example 1 except that EMULGEN 108 in Example 1 was replaced with EMULGEN 150 (manufactured by Kao Corporation) which is a nonionic surfactant having a cloud point of higher than 100°C and a molecular weight of 2,254. The results of measuring and evaluating the electrostatic propensity, moisture content, and battery performance using the manufactured separator as a sample are shown in Table 1.

### (Comparative Example 2)

A separator was manufactured in the same manner as in Example 1 except that EMULGEN 108 in Example 1 was replaced with EMULGEN 120 (manufactured by Kao Corporation) which is a nonionic surfactant having a cloud point of 98°C and a molecular weight of 758. The results of measuring and evaluating the electrostatic propensity, moisture content, and battery performance using the manufactured separator as a sample are shown in Table 1.

### (Comparative Example 3)

A separator was manufactured in the same manner as in Example 1 except that the application of the aqueous solution of EMULGEN 108 in Example 1 was not performed. The results of measuring and evaluating the electrostatic propensity, moisture content, and battery performance using the manufactured separator as a sample are shown in Table 1.

**[Table 1]**

| | Nonionic surfactant | | | Evaluation of electrostatic propensity | | Moisture content (ppm) | Battery performance (%) |
|---|---|---|---|---|---|---|---|
| | Cloud point (°C) | Molecular weight | Attachment amount (g/m²) | Saturation voltage (kV) | Half-life (sec) | | |
| Example 1 | 40 | 450 | 0.2 | 0.2 | 4 | 375 | 79 |
| Example 2 | 40 | 450 | 0.13 | 0.4 | 5 | 339 | 80 |
| Example 3 | 40 | 450 | 0.4 | 0.2 | 4 | 443 | 78 |
| Example 4 | 40 | 450 | 0.6 | 0.1 | 4 | 541 | 75 |
| Example 5 | 55 | 664 | 0.2 | 0.5 | 5 | 1016 | 77 |
| Comparative Example 1 | > 100 | 2254 | 0.2 | 0.8 | 14 | 1716 | 70 |
| Comparative Example 2 | 98 | 758 | 0.2 | 0.5 | 4 | 1615 | 71 |
| Comparative Example 3 | - | - | - | 1.7 | 340 | 344 | 78 |

As shown in Table 1, in examples in which a specific nonionic surfactant having a cloud point of 85°C or lower and a molecular weight of 1,500 or less was used, static electricity was kept to a low level and the handleability was favorable, the moisture amount in the separator was favorable and the battery performance was excellent as compared with comparative examples in which the specific nonionic surfactant was not used.

The entire contents of the present disclosure of Japanese Patent Application No. 2022-060397, filed on March 31, 2022, are incorporated by reference in the present specification.

All publications, patent applications, and technical standards mentioned in this specification are herein incorporated by reference to the same extent as if each individual publication, patent application, or technical standard was specifically and individually indicated to be incorporated by reference.

## Claims

1. A separator for a non-aqueous secondary battery, comprising:
a porous substrate; and
an adhesive layer that is provided on at least one side of the porous substrate and that contains a polyvinylidene fluoride type resin,
wherein the separator contains a nonionic surfactant having a cloud point of from 30°C to 85°C and a molecular weight of from 200 to 1,500.

2. The separator for a non-aqueous secondary battery according to claim 1, wherein the porous substrate comprises a polyolefin microporous film.

3. The separator for a non-aqueous secondary battery according to claim 2, wherein the porous substrate comprises a heat-resistant layer that is provided on at least one side of the polyolefin microporous film and that contains an inorganic filler,
wherein a content of the inorganic filler with respect to the entire heat-resistant layer is 90% by mass or more.

4. The separator for a non-aqueous secondary battery according to any one of claims 1 to 3, wherein the adhesive layer is provided on both sides of the porous substrate.

5. The separator for a non-aqueous secondary battery according to any one of claims 1 to 4, wherein the adhesive layer contains a three-dimensional network structure of the polyvinylidene fluoride type resin.

6. The separator for a non-aqueous secondary battery according to any one of claims 1 to 5, wherein a content of the nonionic surfactant is from 0.05 g/m² to 1.0 g/m².

7. A non-aqueous secondary battery, comprising:
a positive electrode;
a negative electrode; and
the separator for a non-aqueous secondary battery according to any one of claims 1 to 6, the separator being disposed between the positive electrode and the negative electrode.
